# EUROPEAN PATENT APPLICATION

(11) **EP 2 299 634 A1**
(43) Date of publication of application: **23.03.2011**
(21) Application number: 09804472.0
(22) Date of filing: 21.07.2009
(51) Int. Cl.: H04L 12/54

(54) **METHOD FOR CONVERTING AND OBTAINING MAIL, MAIL SERVER, CLIENT AND SYSTEM THEREOF**

(30) Priority: 07.08.2008 CN 200810030053
(71) Applicant: Huawei Technologies Co., Ltd., Longgang District, Shenzhen Guangdong 518129 (CN)
(72) Inventor: SUN, Qian c/o Huawei Technologies Co.Ltd., Int.Prop.Dept., Shenzhen (CN); BAO, Hongqing c/o Huawei Technologies Co.Ltd., Int.Prop.Dept., Shenzhen (CN)
(74) Representative: Kreuz, Georg Maria
(86) International application number: PCT/CN2009/072852
(87) International publication number: WO 2010/015172

(57) **Abstract**

The present invention discloses a mail conversion method, a mail retrieval method, a mail server, a mail client, and a mail system. The mail conversion method includes: converting a received mail according to the instruction of a CONVERT operation in a preset mail filtering language (SIEVE); and relating the original mail before conversion to the target mail after conversion. With the present invention, non-real-time conversion of a mail is enabled, and the time for a client user to retrieve the converted mail is saved.

## Description

### FIELD OF THE INVENTION

The present invention relates to the communications field, and in particular, to a mail conversion method, a mail retrieval method, a mail server, a mail client, and a mail system.

### BACKGROUND OF THE INVENTION

The Internet Message Access Protocol (IMAP) is applicable to access to mailboxes. An IMAP client can manage mail folders on an IMAP server in the same way as the client manages local mail folders. The Internet Engineering Task Force (IETF) extends the IMAP protocol so that a client can convert mails by using an IMAP CONVERT command. The CONVERT command can specify conversion parameters and define the target format for the Multipurpose Internet Mail Extensions (MIME) part of the mails.

In a prior art, a mail conversion method using the IMAP CONVET command is as follows:

First, a mail client connects to an IMAP server.

Then, the mail client retrieves a mail list in a mail folder.

After the mail client retrieves the mail list of a mail folder, the following steps are executed:
1. The IMAP client sends a CONVERT command, requesting to convert a mail.
2: The IMAP server receives the CONVERT message and executes the requested conversion.
3. The IMAP server sends the conversion result to the IMAP client.
4. The IMAP server returns the final response message.

It has however become apparent that, according to the prior art, to obtain the converted content of a mail, the IMAP client must send a CONVERT command to the server first and wait for the conversion result returned by the server. This method is only applicable to the real-time conversion of mails and increases the waiting time of the client. In the case of a mail that contains many contents to be converted, the IMAP client must wait for a long time to obtain the converted mail contents.

### SUMMARY OF THE INVENTION

The present invention provides a mail conversion method, a mail retrieval method, a mail server, a mail client, and a mail system. The purpose is to enable non-real-time mail conversion and save the time for a client user to retrieve a converted mail.

For the above purpose, according to the first aspect the present invention provides a mail conversion method, including:
receiving a mail; and
converting the received mail according to an instruction of a CONVERT operation in a preset mail filtering language (SIEVE).

According to the second aspect of the present invention a mail retrieval method includes:
sending a user login request to a mail server to log in to the server;
finding an original mail; and
determining whether a target mail related to the mail exists, and if a target mail related to the mail exists, retrieving the target mail according to the relation information.

According to the third aspect of the present invention a mail server includes:
a receiving module, configured to receive a mail; and
a converting module, configured to convert the mail received by the receiving module according to an instruction of a CONVERT operation in a preset SIEVE language.

According to the fourth aspect of the present invention a mail client includes:
a login module, configured to send a user login request to a mail server to log in to the server;
a searching module, configured to find an original mail after the user logs in to the mail server through the login module; and
a retrieving module, configured to determine whether a target mail related to the original mail found by the searching module exists, and if a target mail related to the original mail found by the searching module exists, retrieve the target mail according to the relation information.

According to the fifth aspect of the present invention a mail system includes:
a mail server that can communicate with a mail client, where:
   the mail server is configured to: receive a mail, convert the received mail according to an instruction of a CONVERT operation in a preset SIEVE language, and relate the original mail to the target mail; and
   the mail client is configured to send a user login request to the mail server to log in to the mail server, and after the user logs in to the mail server, find the original mail and determine whether a target mail related to the found mail exists, and if a target mail related to the found mail exists, retrieve the target mail according to the relation information.

According to the present invention, when the mail server receives a mail, the mail server converts the mail according to the instruction of a CONVERT operation in the preset SIEVE language. Thus, when a user retrieves a converted mail through a client, the user does not need to request mail conversion in real time. Thus, the present invention enables non-real-time conversion of a mail and save the time for the client to retrieve the converted mail.

### BRIEF DESCRIPTION OF THE DRAWINGS

To better explain the technical solution of the present invention, the accompanying drawings required in the description of the embodiments of the present invention are briefly introduced below. It is apparent that the accompanying drawings illustrate only some exemplary embodiments of the present invention.
FIG. 1 illustrates a structure of a mail system according to a first embodiment of the present invention;
FIG. 2 illustrates a structure of a mail server according to a second embodiment of the present invention;
FIG. 3 illustrates a structure of a mail client according to a third embodiment of the present invention;
FIG. 4 is a flowchart of a mail conversion method according to a fourth embodiment of the present invention;
FIG. 5 is a flowchart of a mail conversion method according to a fifth embodiment of the present invention; and
FIG. 6 is a flowchart of a mail retrieval method according to a sixth embodiment of the present invention.

### DETAILED DESCRIPTION OF THE EMBODIMENTS

The technical solution of the present invention is hereinafter described in detail with reference to the accompanying drawings. Apparently, the embodiments are exemplary only and the present invention is not limited to such embodiments.

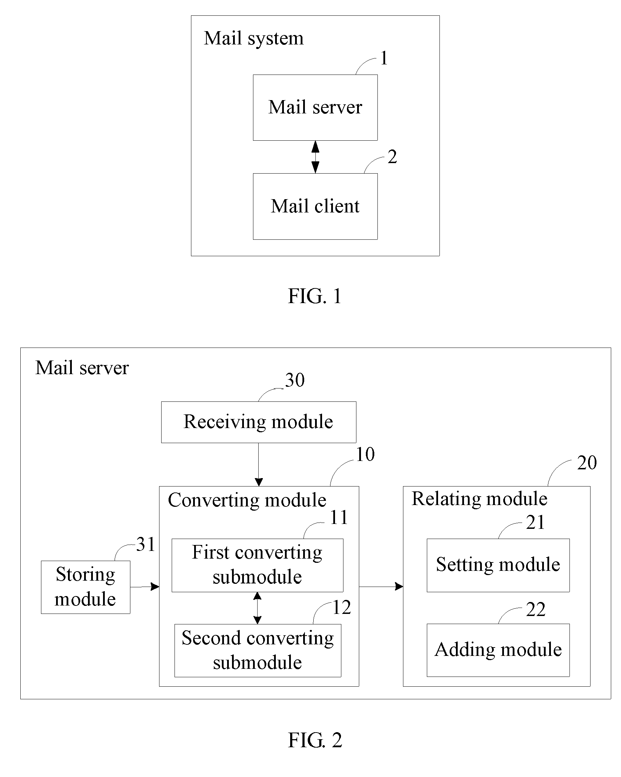

FIG. 1 illustrates a structure of the mail system according to a first embodiment of the present invention. The mail system may include multiple mail servers that communicate with mail clients, where each mail server can communicate with more than one mail client. For easy description, this embodiment takes a mail system including one mail server that communicates with one mail client as an example. As shown in FIG. 1, the mail system includes a mail server 1 and a mail client 2.

The mail server 1 is configured to: receive a mail and convert the mail according to an instruction of a CONVERT operation in a preset SIEVE language, and relate the original mail to the target mail. In practice, the mail server 1 may be an IMAP mail server or a Post Office Protocol 3 (POP3) mail server. A user can log in to the mail server 1 through a client and define the SIEVE script language for instructing mail conversion. The SIEVE script language includes mail conversion instruction information which may incorporate an instruction of converting mails containing Graphics Interchange Format (GIF) images to multiple image formats. For example, the user may set to convert a GIF image to images of multiple other formats and incorporate the multiple target images in a compound Multipurpose Internet Mail Extensions (MIME) part named "multipart/related".

The mail client 2 is configured to send a login request of the user to the mail server to log in to the server 1, and when login to the mail server 1 is successful, find the original mail and determine whether a target mail related to the found original mail exists, and if a target mail related to the found original mail exists, retrieve the target mail according to the relation information. In practice, the mail client 2 may be an IMAP-enabled mail client or a POP3-enabled mail client.

In the embodiment, when the mail server receives a mail from an external source, the mail server converts the received mail according to the instruction of a CONVERT operation in the preset SIEVE language and relates the original mail before conversion to the target mail after conversion, so that the user can retrieve the converted mail from the mail server through the mail client. This enables non-real-time conversion of a mail and saves the time for the client to retrieve the converted mail.

In another embodiment of the present invention, the mail system includes a mail server, a mail client and a relating apparatus. The function of the mail client is the same as that of the mail client in the above embodiment; the mail server provides the mail reception and conversion functions in the above embodiment; the relating apparatus is configured to relate the original mail before conversion to the target mail after conversion.

FIG. 2 illustrates a structure of the mail server according to a second embodiment of the present invention. As shown in FIG. 2, the mail server includes at least a receiving module 30, a converting module 10, a relating module 20, and a storing module 31. The receiving module 30 is configured to receives a mail; the converting module 10 is configured to convert the received mail according to the instruction of a CONVERT operation in a preset SIEVE language; the relating module 20 is configured to relate the original mail before conversion to the target mail after conversion; and the storing module 31 is configured to store the preset SIEVE language, the original mail before conversion, and the target mail after conversion.

In practice, the converting module 10 may include a first converting submodule 11, configured to convert the MIME part of the received mail according to the instruction of the CONVERT operation carried in the for_every_part operation of the LOOP extension of the preset SIEVE language. The LOOP extension of SIEVE may traverse every MIME part of the mail so that the CONVERT operation carried in the LOOP extension can modify every traversed MIME part and convert one type of MIME to a specified MIME type. The CONVERT operation may carry conversion parameters. For example, for the conversion of images, it may specify the original image format, the target image format, and the image size or display area size of the target image. The following is an example of a CONVERT operation in the LOOP extension of a SIEVE script.

### Example 1:

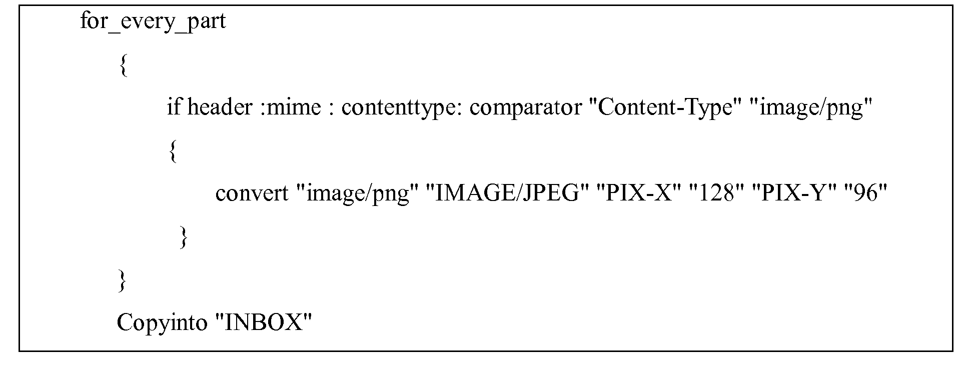

In example 1, image data of the image/png format in a mail before conversion is converted to target image data of the image/JPEG format; the size of a target image is specified as pixel width 128 and pixel height 96; and the target mail after conversion will be stored in the INBOX folder of the storing module 31. When the LOOP is adopted for extension, the original mail before conversion still exists. Therefore, if the original mail needs to be stored in practice, it is only necessary to store the original mail before conversion.

Corresponding to the first converting submodule 11, the storing module 31 may include a first storing submodule (not shown in the Figure), a second storing submodule (not shown in the Figure), and a third storing submodule (not shown in the Figure). The first storing submodule is configured to store the preset SIEVE language; the second storing submodule is configured to store the original mail before conversion; and the third storing submodule is configured to store the target mail after conversion according to the instruction of the first storing operation (such as the Copyinto "INBOX" in example 1) in the preset SIEVE language.

In practice, the converting module 10 may include a second converting submodule 12, configured to convert the MIME part of the received mail according to the instruction of the CONVERT operation carried in a fileinto operation in the preset SIEVE language. A CONVERT operation defined by fileinto in the SIEVE language may include the following parameters:
Original MIME type: means converting MIME data of the specific MIME type in the original mail;
Target MIME type: means converting the above MIME data into the MIME type format indicated by the parameter;
Target format list: means the storing folder of the target mail after conversion.

Such a fileinto operation means converting all original MIME data indicated by the CONVERT operation in the mail to the specified target MIME type and storing the converted mail to the specified mail folder.

The following is an example of a CONVERT operation in a fileinto operation of a SIEVE script.

### Example 2:

### Fileinto :convert "image/bmp" "image/jpg" "PIX-X" "240" "PIX-Y" "320" "CONVERSION"

In example 2, image data of the image/bmp format in the mail before conversion is converted to image data of the image/jpg format as the target image of the target mail; the pixel width of the target image is specified as 240 and the pixel height is specified as 320; and the converted image will be stored in the CONVERSION folder.

In addition to instructing mail conversion using the CONVERT operation in fileinto, the user may need to store the original mail that is converted. In this case, another fileinto operation can be used to meet the need. That is, a fileinto operation is written in the SIEVE script to store the original mail. The following gives an example about how a fileinto operation is used to instruct the storing of the original mail.

### Example 3:

### Fileinto :convert "image/bmp" "image/jpg" "PIX-X" "240" "PIX-Y" "320" "CONVERSION"

### Fileinto "INBOX"

In practice, one original mail can be converted to target mails of different formats stored in different folders. Assume there are two folders named "mobileLarge" and "mobileSmall" in the IMAP mail server. The following CONVERT operation can instruct how a mail is converted to two mails and the original mail is stored.
Fileinto :convert "image/bmp" "image/jpg" "PIX-X" "240" "PIX-Y" "320" "mobileLarge"
Fileinto :convert "image/bmp" "image/jpg" "PIX-X" "128" "PIX-Y" "128" "mobileSmall"
Fileinto "INBOX"

Corresponding to the second converting submodule 12, the storing module 31 may include a fourth storing submodule (not shown in the Figure), a fifth storing submodule (not shown in the Figure), and a sixth storing submodule (not shown in the Figure). The fourth storing submodule is configured to store the preset SIEVE language; the fifth storing submodule is configured to store the target mail created after conversion according to the instruction of the CONVERT operation; and the sixth storing submodule is configured to store the original mail before conversion according to the instruction of the second storing operation (such as fileinto "INBOX" in example 3) in the preset SIEVE language.

In practice, the pixel width and pixel height of the target image may be used as the conversion parameters in an image conversion process. Alternatively, the width and height of the target display area may also be used as the conversion parameters, so that the converted image keeps the original width-to-height ratio.

By using the size of the target display area as the conversion parameters, the original width-to-height ratio of the image may be kept, and the image will not be distorted.

The conversion parameters may be defined as follows:
Parameter VIEW-X: indicates the width of the target display area;
Parameter VIEW-Y: indicates the height of the target display area.

The following takes a CONVERT operation that includes VIEW-X and VIEW-Y as an example:
CONVERT "image/bmp" "image/jpg" "VIEW-X" "320" "VIEW-Y" "240"

When the CONVERT operation defines the above parameters, the conversion process will determine the width and height of the target display area according to the parameters to keep the original width-to-height ratio of the image and align the width or height of the target image with the target display area.

The CONVERT in the SIEVE script is extended above so that the size of the display area can be used as conversion parameters in the conversion process. The server can process the conversion according to the size of the original image.

If the width or the height of the original image does not exceed the width or height of the target display area, the server does not change the size of the image during the conversion.

If the width-to-height ratio of the original image is higher than that of the target display area, the width-to-height ratio of the original image is not changed during the conversion, but the width after conversion is changed to be equal to the width of the target display area.

If the width-to-height ratio of the original image is lower than that of the target display area, the width-to-height ratio of the original image is not changed during the conversion, but the height after conversion is changed to be equal to the height of the target display area.

Accordingly, the relating module 20 may further include a setting module 21 and an adding module 22.

The setting module 21 is configured to set a first tag for the original mail before conversion. The first tag indicates that a target mail related to the original mail exists. In practice, the first tag may be "converted".

The adding module 22 is configured to add a first data item for the original mail before conversion. The original mail is related to the target mail through the first data item. In practice, the first data item may be CONVERTED which may carry the ID or address information of the target mail to relate the original mail to the target mail.

In another embodiment of the present invention, in addition to the converting module 10 and relating module 20 shown in FIG. 2 and their submodules, the mail server may further include:
an extracting module (not shown in the Figure), configured to extract the Exchangeable Image File Format (EXIF) file in the mail; and
a generating module (not shown in the Figure), configured to generate an Extensible Markup Language (XML) document in the target mail created after the conversion to store the EXIF file extracted by the extracting module.

In practice, if the target image does not support EXIF information, the EXIF information contained in the original image is extracted and an XML document is generated in the target image to store the EXIF information. The MIME part in the target image corresponding to that in the original image is replaced by a new multipart/related compound MIME format. The compound MIME part includes an MIME part of the target image and an MIME part that incorporates data of the above XML document.

In another embodiment of the present invention, in addition to the functional modules shown in FIG. 2, the mail server may further include:
a decompressing module, configured to decompress the received mail according to the instruction of the preset SIEVE language.

In practice, an unzip operation in the preset SIEVE language can be used to instruct the decompression of compressed data of MIME types "application/x-zip-compressed", "application/x-gzip", and "application/x-tar" in the mail. The decompressed data is incorporated in the MIME part of the converted mail and the MIME type information is written according to the file format after decompression. The following is an example of a SIEVE script that includes an unzip operation.

### Example 4:

for_every_part

```
             {
                  if header :mime : contenttype: comparator "Content-Type" "image/png"
                  {
                       unzip
                    }
          }
```

The script in example 4 means decompressing the original mail.

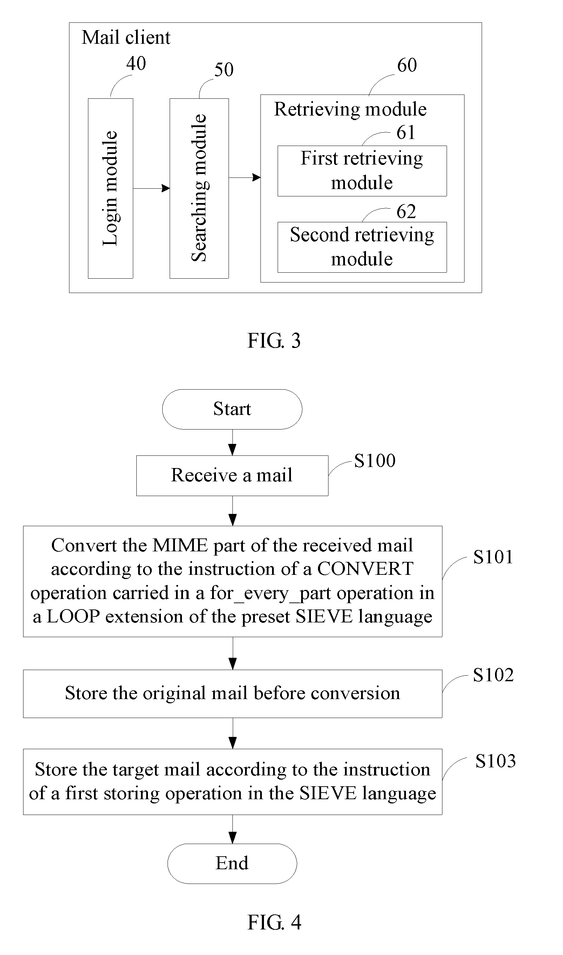

FIG. 3 illustrates a structure of the mail client according to a third embodiment of the present invention. As shown in FIG. 3, the mail client includes at least a login module 40, a searching module 50, and a retrieving module 60. The login module 40 is used for a user to log in to a mail server. The searching module 50 is configured to find a mail after the user logs in to the mail server via the login module 40. In practice, after the user logs in to the mail server, the user can view the mail list. When the user views one mail, the user can view the ID, subj ect, time of reception, and tags (including the first tag in the embodiment of the present invention) of the mail. The retrieving module 60 is configured to determine whether a target mail related to the mail found by the searching module 50 exists, and if a target mail related to the mail found by the searching module 50 exists, retrieve the target mail according to the relation information.

Further, the retrieving module 60 may include a first retrieving module 61 and a second retrieving module 62.

The first retrieving module 61 is configured to determine whether the original mail carries the first tag, and if the original mail carries the first tag, retrieve a first data item of the original mail. In practice, the first tag may be "converted" and the first data item may be a CONVERTED item which carries the ID or address information of the target mail. The original mail is related to the target mail according to the ID or address information of the target mail. The first retrieving module 61 may retrieve the first data item through a SIEVE language. An example of the SIEVE language is given below.

### Example 5:

C: A654 FETCH 2:4 (CONVERTED) /*The mail client sends a request for retrieving the value of CONVERTED to the mail server*/
S: * 2 FETCH ..... /*The mail server responds to the request for retrieving the value of CONVERTED from the mail client and provides the value of CONVERTED to the client*/
S: A654 OK FETCH completed (The mail server sends response success information to the mail client)

The second retrieving module 62 is configured to retrieve the target mail according to the first data item retrieved by the first retrieving module 61. For example, after the first retrieving module 61 in example 5 retrieves the ID of the target mail, the second retrieving module 62 searches for the target mail according to the ID of the target mail and retrieves the target mail.

In practice, when the mail server in FIG. 2 receives a mail, the server converts the received mail according to the instruction of a CONVERT operation in the preset SIEVE language and relates the original mail before conversion to the target mail after conversion. In this way, when a user retrieves the converted mail through the client shown in FIG. 3, the user can retrieve the converted mail from the mail server directly. This enables non-real-time conversion of a mail and saves the time for the client to retrieve the converted mail.

Accordingly, an embodiment of the present invention provides a mail conversion method. The mail conversion method may be implemented on the mail server provided in the embodiments of the present invention. The method includes:
receiving a mail; and
converting the mail according to the instruction of a CONVERT operation in a preset SIEVE language.

According to the method in the embodiment of the present invention, when the mail server receives a mail, the mail server converts the mail according to the instruction of a CONVERT operation in the preset SIEVE language. Thus, when a user retrieves a converted mail through a client, the user does not need to request mail conversion in real time. This enables non-real-time conversion of a mail and saves the time for the client to retrieve the converted mail.

FIG. 4 is a flowchart of the mail conversion method according to a fourth embodiment of the present invention. As shown in FIG. 4, the mail conversion method includes the following steps:
Step S100: A mail server receives a mail.
Step S101: The mail server converts the MIME part of the received mail according to the instruction of the CONVERT operation carried in the for_every_part operation in the LOOP extension of the preset SIEVE language. In practice, the SIEVE language may incorporate an instruction of specific conversion of a mail that carries a GIF image. For example, the user may set to convert an original GIF image to images of multiple other formats and incorporate the multiple target images in a compound MIME part named "multipart/related".
Step S102: The server stores the original mail before conversion.
Step S103: The server stores the target mail after conversion according to the instruction of the first storing operation in the SIEVE language.

In practice, the first storing operation may be a Copyinto "INBOX" operation in example 1.

According to the method in the embodiment of the present invention, when the mail server receives a mail, the mail server converts the mail according to the instruction of a CONVERT operation in the preset SIEVE language. Thus, when a user retrieves a converted mail through a client, the user does not need to request mail conversion in real time. This enables non-real-time conversion of a mail and saves the time for the client to retrieve the converted mail.

Preferably, the method in the embodiment of the present invention may further include:
a relating step (not shown in the Figure):
   set a first tag for the original mail before conversion, where the first tag indicates the target mail related to the original mail.

In practice, the first tag may be "converted".

Add a first data item for the original mail before conversion. The original mail is related to the target mail through the first data item.

In practice, the first data item may be CONVERTED which may carry the ID or address information of the target mail to relate the original mail to the target mail.

After the original mail is related to the target mail, when a user retrieves the converted mail through a client, the user can retrieve the converted mail from the mail server directly according to the relation information. This further saves the time for a user to retrieve a mail.

In practice, a tag and a data item may also be set for the target mail to relate the target mail to the original mail. The method is similar and will not be described here. In this way, it is unnecessary to change the original mail.

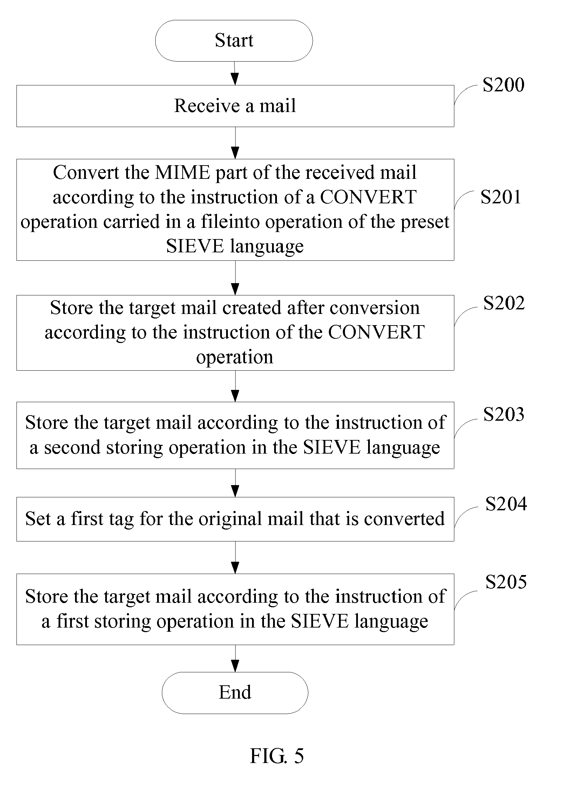

FIG. 5 is a flowchart of the mail conversion method according to a fifth embodiment of the present invention.

As shown in FIG. 5, the method includes the following steps:
Step S200: A mail server receives a mail.
Step S201: The mail server converts the MIME part of the received mail according to the instruction of the CONVERT operation carried in a fileinto operation in the preset SIEVE language.
Step S202: The mail server stores the target mail created after conversion according to the instruction of the CONVERT operation. For example, the server stores the target mail in a folder named "mobileLarge" according to the last item in the operation Fileinto :convert "image/bmp" "image/jpg" "PIX-X" "240" "PIX-Y" "320" "mobileLarge".
Step S203: The mail server stores the original mail before conversion according to the second storing operation in the SIEVE language. For example, the second storing operation may be the fileinto "INBOX" operation in example 3.
Step S204: The mail server sets a first tag for the original mail before conversion. The first tag indicates that a target mail related to the original mail exists. In practice, the first tag may be "converted".
Step S205: The mail server adds a first data item for the original mail before conversion. The original mail is related to the target mail through the first data item.

In practice, the first data item may be CONVERTED which may carry the ID or address information of the target mail to relate the original mail to the target mail.

According to the method in the embodiment of the present invention, when the mail server receives a mail, the mail server converts the mail according to the instruction of a CONVERT operation in the preset SIEVE language. Thus, when a user retrieves a converted mail through a client, the user does not need to request mail conversion in real time. This enables non-real-time conversion of a mail and saves the time for the client to retrieve the converted mail. Furthermore, the mail server relates the original mail to the target mail during the conversion. When a user retrieves the converted mail through a client, the user can retrieve the converted mail from the mail server directly according to the relation information. This further saves the time for a user to retrieve a mail.

In practice, the original mail to be converted may carry EXIF information. When such an original mail is converted, the mail server not only needs to convert the mail according to the instruction of the CONVERT operation in the LOOP extension or fileinto operation, but also needs to process the EXIF information. Specifically, the mail server may extract the EXIF information of the original mail before converting the original mal according to the instruction of the CONVERT operation and generate an XML document in the target mail created after conversion to store the extracted EXIF information. Specifically, the server may set a new multipart/related compound MIME format to store the MIME and XML document created after conversion.

In practice, the received mail may be a compressed file. In this case, the mail server will decompress the mail before the conversion. Specifically, the mail server can decompress the received mail according to the instruction of the preset SIEVE language. For example, the mail server may decompress the compressed data of MIME types "application/x-zip-compressed", "application/x-gzip", and "application/x-tar" carried in the mail according to the instruction of an unzip operation in the preset SIEVE language.

Corresponding to the mail conversion method provided in the embodiments of the present invention, an embodiment of the present invention provides a mail retrieval method. The mail retrieval method includes the following steps:
a user logs in to a mail server through a mail client;
the user finds a mail; and
the user determines whether a target mail related to the mail exists, and if a target mail related to the mail exists, retrieves the target mail according to the relation information.

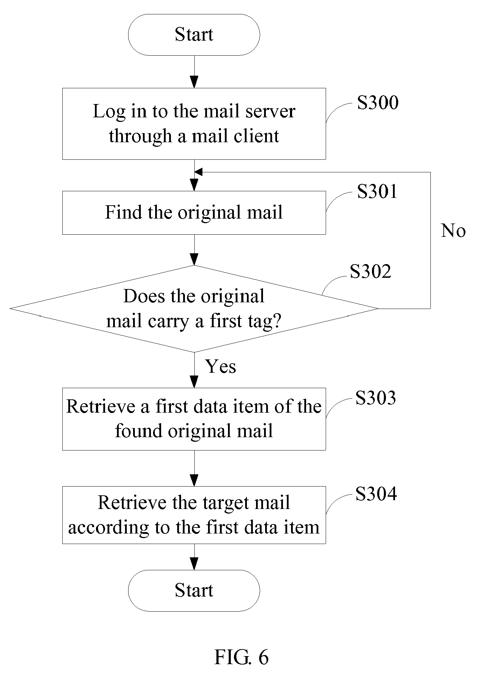

FIG. 6 is a flowchart of the mail retrieval method according to a sixth embodiment of the present invention. As shown in FIG. 6, the mail retrieval method includes the following steps:
Step S300: A user logs in to a mail server through a mail client.
Step S301: The user finds a mail. In practice, after the user logs in to the mail server, the user can view a mail list and when the user views one mail, the user can view the ID, subject, time of reception, and tags (including the first tag in the embodiment of the present invention) of the mail.
Step S302: The user determines whether the found mail carries the first tag, and if the found mail carries the first tag, step S303 is performed; if the found mail does not carry the first tag, step S301 is performed. In practice, the first tag may be "converted".
Step S303: The user retrieves a first data item of the found mail. In practice, the first data item may be CONVERTED.
Step S304: The user retrieves the target mail according to the first data item.

According to the mail conversion method provided in the embodiments of the present invention, when a mail server receives a mail, the mail server can convert the received mail and relate the original mail before conversion to the target mail created after conversion according to the instruction of the preset SIEVE language. Thus, when a user wants to retrieve the converted mail, the user can log in to the mail server according to the mail retrieval method provided in the embodiment of the present invention and retrieve the converted mail from the mail server directly. This, on the one hand, enables non-real-time conversion of a mail, and on the other hand, saves the time for the user to retrieve the converted mail.

Those skilled in the art understand that all or part of the steps of the methods provided in the embodiments of the present invention can be implemented by hardware under the instruction of a computer program. The program may be stored in a computer readable storage medium and when the program runs, the steps of the methods in the above embodiments of the present invention are executed. The storage medium may be a magnetic disk, a Compact Disk-Read Only Memory (CD-ROM), a Read Only Memory (ROM), or a Random Access Memory (RAM).

Although the invention has been described through exemplary embodiments, the invention is not limited to such embodiments. It is apparent that those skilled in the art can make various modifications and variations to the invention.

## Claims

1. A mail conversion method, comprising:
receiving a mail; andconverting the received mail according to instruction of a CONVERT operation in a preset mail filtering language (SIEVE) to obtain a target mail.

2. The method of claim 1, wherein after the step of converting the received mail according to instruction of the CONVERT operation in the preset SIEVE language, the method further comprises:
storing the mail and the target mail.

3. The method of claim 2, wherein the step of converting the received mail according to the instruction of the CONVERT operation in the preset SIEVE language comprises:
converting a Multipurpose Internet Mail Extensions (MIME) part of the received mail according to the instruction of the CONVERT operation carried in a for_every_part operation in a LOOP extension of the preset SIEVE language.

4. The method of claim 3, wherein the step of converting the received mail according to the instruction of the CONVERT operation in the preset SIEVE language comprises:
converting the MIME part of the received mail according to the instruction of the CONVERT operation carried in a fileinto operation of the preset SIEVE language.

5. The method of claim 3, wherein the step of storing the mail and the target mail comprises:
storing the mail after converting the MIME part in the received mail according to the instruction of the CONVERT operation carried in the for_every_part operation; and
storing the target mail according to the instruction of a first storing operation in the SIEVE language.

6. The method of claim 5, wherein the first storing operation is a copy operation which indicates a storage path of the target mail.

7. The method of claim 4, wherein the step of storing the mail and the target mail comprises:
storing the target mail after converting the MIME part in the received mail according to the instruction of the CONVERT operation carried in the storing operation; and
storing the mail according to the instruction of a second storing operation in the SIEVE language.

8. The method of claim 7, wherein the second storing operation is an original storing operation which indicates a storage path of the original mail.

9. The method of the claim 1, further comprising:
extracting an Exchangeable Image File Format (EXIF) file in the mail before converting the received mail; and
generating an Extensible Markup Language (XML) document in the target mail to store the extracted EXIF file after converting the mail.

10. The method of the claim 1, further comprising:
decompressing the mail according to the instruction of the preset SIEVE language.

11. The method of claim 10, wherein the step of decompressing the mail according to the instruction of the preset SIEVE language comprises:
decompressing the mail according to the instruction of an unzip operation carried in a for_every_part operation in a LOOP extension of the preset SIEVE language.

12. The method of the claim 1, further comprising:
relating the mail to the target mail.

13. The method of claim 12, wherein the step of relating the mail to the target mail comprises:
setting a first tag for the original mail before conversion, wherein the first tag indicates that a target mail related to the original mail exists; and
adding a first data item for the original mail before conversion, wherein the original mail is related to the target mail through the first data item.

14. The method of claim 13, wherein the first tag is a "converted" tag.

15. The method of claim 13, wherein the first data item is a CONVERT data item.

16. The method of any one of claims 1-15, wherein the SIEVE language comprises an instruction of converting a mail carrying Graphics Interchange Format (GIF) images to multiple target image formats.

17. A mail retrieval method, comprising:
sending a user login request to a mail server to log in to the server;
finding a mail; and
determining whether a target mail related to the mail exists, and if a target mail related to the mail exists, retrieving the target mail according to the relation information.

18. The method of claim 17, wherein the step of determining whether a target mail related to the mail exists, and if a target mail related to the mail exists, retrieving the target mail according to the relation information comprises:
determining whether the original mail carries a first tag and if the original carries the first tag, retrieving a first data item of the mail; and
retrieving the target mail according to the first data item.

19. A mail server, comprising:
a receiving module, configured to receive a mail; and
a converting module, configured to convert the mail received by the receiving module according to an instruction of a CONVERT operation in a preset mail filtering language (SIEVE).

20. The mail server of claim 19, further comprising:
a storing module, configured to store the preset SIEVE language, the mail, and the target mail.

21. The mail server of claim 20, wherein the converting module comprises:
a first converting submodule, configured to convert a Multipurpose Internet Mail Extensions (MIME) part of the received mail according to the instruction of the CONVERT operation carried in a for_every_part operation in a LOOP extension of the preset SIEVE language.

22. The mail server of claim 20, wherein the converting module comprises:
a second converting submodule, configured to convert a Multipurpose Internet Mail Extensions (MIME) part of the received mail according to the instruction of the CONVERT operation carried in a storing operation of the preset SIEVE language stored by the storing module.

23. The mail server of claim 21, wherein the storing module comprises:
a first storing submodule, configured to store the preset SIEVE language;
a second storing submodule, configured to store the mail; and
a third storing submodule, configured to store the target mail according to an instruction of a first storing operation in the preset SIEVE language.

24. The mail server of claim 22, wherein the storing module comprises:
a fourth storing submodule, configured to store the preset SIEVE language;
a fifth storing submodule, configured to store the target mail according to the instruction of the CONVERT operation; and
a sixth storing submodule, configured to store the mail according to an instruction of a second storing operation in the preset SIEVE language.

25. The mail server of the claim 19, further comprising:
an extracting module, configured to extract an Exchangeable Image File Format (EXIF) file in the mail; and
a generating module, configured to generate an Extensible Markup Language (XML) document in the target mail to store the EXIF file.

26. The mail server of claim 19, further comprising:
a decompressing module, configured to decompress the received mail according to the instruction of the preset SIEVE language.

27. The mail server of claim 19, further comprising:
a relating module, configured to relate the mail to the target mail.

28. The mail server of claim 27, wherein the relating module comprises:
a setting module, configured to set a first tag for the original mail, wherein the first tag indicates the target mail related to the original mail; and
an adding module, configured to add a first data item for the original mail, wherein the original mail is related to the target mail through the first data item.

29. A mail client, comprising:
a login module, configured to send a user login request to a mail server to log in to the server;
a searching module, configured to find a mail after the user logs in to the mail server through the login module; and
a retrieving module, configured to determine whether a target mail related to the mail found by the searching module exists, and if a target mail related to the mail found by the searching module exists, retrieve the target mail according to the relation information of the mail.

30. The client of claim 29, wherein the retrieving module comprises:
a first retrieving module, configured to determine whether the mail carries a first tag and if the mail carries the first tag, retrieve a first data item of the mail; and
a second retrieving module, configured to retrieve the target mail according to the first data item.

31. A mail system, comprising:
a mail server that can communicate with a mail client, wherein:
the mail server is configured to: receive a mail, convert the received mail according to an instruction of a CONVERT operation in a preset mail filtering language (SIEVE), and relate the mail to the target mail; and
the mail client is configured to send a user login request to the mail server to log in to the mail server, and after the user logs in to the mail server, configured to find the mail and determine whether a target mail related to the found mail exists, and if a target mail related to the found mail exists, retrieve the target mail according to the relation information of the mail.
